# EUROPEAN PATENT SPECIFICATION

(11) **EP 0 506 125 B1**
(45) Date of publication and mention of the grant of the patent: **24.01.1996**
(21) Application number: 92105381.5
(22) Date of filing: 27.03.1992
(51) Int. Cl.: F16D 65/02

(54) **Dust-proof boot and method for mounting same**
Staubdichte Büchse und Verfahren zum Montieren derselben
Coussinet étanche aux poussières et procédé pour monter le même

(30) Priority: 29.03.1991 JP 20233/91 U
(43) Date of publication of application: 30.09.1992
(73) Proprietor: AKEBONO BRAKE INDUSTRY CO., LTD., Chuo-ku Tokyo 103 (JP)
(72) Inventor: Takemori, Fumio, Hanyu-shi, Saitama (JP); Kinoshita, Kazuhisa, Konosu-shi, Saitama (JP); Ikegami, Hiroshi, Kuki-shi, Saitama (JP); Aoyagi, Shinji, Hanyu-shi, Saitama (JP); Odaka, Seiya, Kazo-shi, Saitama (JP); Negishi, Toshiyuki, Kumagaya-shi, Saitama (JP)
(74) Representative: Klunker . Schmitt-Nilson . Hirsch

(56) References cited:
- DE-A- 3 633 337
- GB-A- 2 160 600
- GB-A- 2 160 601
- US-A- 4 235 313
- US-A- 4 324 318
- US-A- 4 557 354
- US-A- 4 926 979

## Description

The present invention relates to a dust-proof boot for dust-proofing between a pin and a caliper, and a method for mounting the boot.

In a disk brake of this kind, a caliper 1 interiorly provided with a pad for holding a disk 30 from opposite surfaces thereof is slidably mounted in an axial direction of the disk with respect to a support 32, as shown in Fig. 4, for example USP 4,448,287.

A pin 2 is slidably inserted into a hole formed in the caliper 1, the pin 2 being screwed into the support 32 secured to a vehicle body. These pins 2 are provided on opposite ends of the caliper 1 and support the caliper 1 slidably with respect to the support 32.

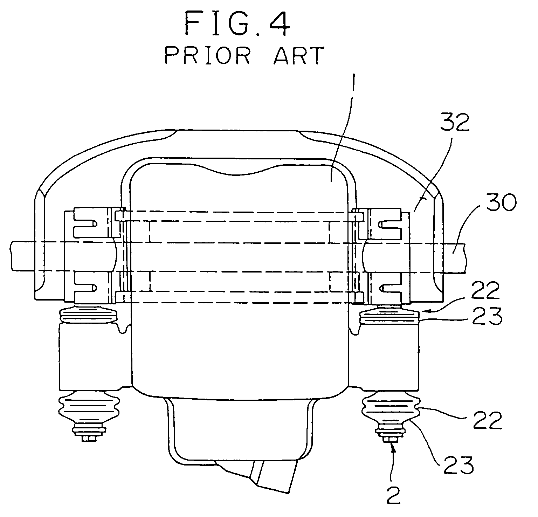

The construction of the peripheral portion of the dust-proof boot is shown in Fig. 4. That is, the pins 2 are slidably inserted into the caliper 1, and a dust-proof boot 22 is provided between the caliper 1 and the pin 2.

The dust-proof boot 22 has a bellows portion 23 formed at one end with a mounting portion on the caliper and at the other end with a mounting portion on the pin, the mounting portion on the caliper having an engaging projection projected at a radius angle. The engaging projection is fitted into an engaging annular groove provided in the caliper 1, and the pin 2 is inserted into an engaging internal diameter portion whereby the dust-proof boot can be fixed. However, in this system, the assembly apparatus is so difficult as to comprise an obstacle to automation.

The present invention has been achieved in view of the foregoing and provides a technique in which a dust-proof boot can be mounted simply and positively.

For solving the above-described technical problems, the present invention provides a dust-proof boot for dust-proofing between a support and a pin, inserted into a guide hole of the support, of a disk brake, said boot being made of resilient material and formed as a sleeve having an expansible bellows portion, a first end with an engaging ring for engagement with the pin, and a second end with an internal engaging ring for internal engagement with the guide hole as well as with an external engaging ring for external engagement with the support, characterized in
- that the boot branches into an internal branch portion extending to the internal engaging ring and an external branch portion extending to the external engaging ring;
- and that the internal branch portion comprises at least one air flow port allowing the passage of compressed air (A) from the inside of the bellows portion for spreading the external engaging ring when, during the process of mounting the boot to the support, a space is formed confined by the internal branch portion, the external branch portion and the part of the support located between the internal engaging ring and the external engaging ring.

A dust-proof boot according to the precharacterizing part of the preceding paragraph is known from US patent no. 4 926 979.

The invention, moreover, provides a method for mounting the dust-proof boot to a support, as described in claim 3.

In mounting the dust-proof boot on a support provided with a guide hole, the internal engaging ring of the dust-proof boot is fitted into an internal groove of the support, after which compressed air is supplied from the interior of the bellows portion, said compressed air spreading the external engaging ring via the air flow port to fit the external engaging ring into the external groove.

In the aforementioned arrangement, when the dust-proof boot (bellows portion) is pressurized under the state wherein the internal engaging ring is inserted into the internal groove so that the interior of the guide hole reaches a positive pressure in excess of a predetermined level, pressurized air flows into a portion surrounded by the internal engaging ring, the external engaging ring and the end of the guide hole through the air flow port. The external engaging ring is spread by the pressure and the external engaging ring is completely fitted in the external groove.

According to the present invention, when the internal engaging ring and the external engaging ring are inserted into the support of the caliper, the dust-proof boot is interiorly pressurized so that the external engaging ring is spread by air flown through the air flow port. Therefore, mounting of the external engaging ring to the external groove is easy, the dust-proof boot can be simply and positively mounted and automation of installation thereof becomes easy.

Fig. 1 is a sectional view showing one embodiment of the present invention.

Fig. 2 is a sectional view of the assembling process showing one embodiment of the present invention.

Fig. 3 is a sectional view of the assembling state showing one embodiment of the present invention.

Fig. 4 is a plan view of a general disk brake in prior art.

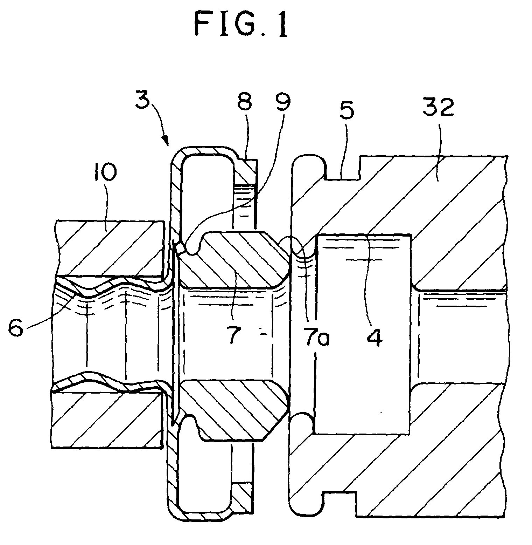

An embodiment of the present invention will be described hereinbelow with reference to Figs. 1 to 3.

A dust-proof boot 3 is formed of a resilient material and is arranged between a support 32 and a pin 2 to have a function for preventing dust from entering.

The support 32 is provided with a guide hole 33. The guide hole is formed in an internal wall and an external wall on one end thereof with an annular internal groove 4 and external groove 5 along the peripheral direction.

The dust-proof boot 3 has an internal engaging ring 7 engaged with the internal groove 4 and an external engaging ring 8 engaged with the external groove 5 extended from one end of a tubular expansible bellows portion 6. The internal engaging ring 7 has a damping function of the pin 2 and is formed at the extreme end with a taper 7a. The internal engaging ring 7 is formed at its base with an air flow port 9. One air flow port 9 will suffice but a plurality of air flow ports may be provided. This air flow port 9 is provided, at one end of the bellows portion 6, at the base on the side of the internal engaging ring 7 from a branch portion of the internal engaging ring 7 and the external engaging ring 8.

The bellows portion 6 is provided on the other end thereof with a ring portion 6a fixed to the pin 2 extending through the guide hole 33 and the bellows portion 6.

In mounting the dust-proof boot 3, a tubular first jig 10 and a second jig 11 for replacing in the process are used.

As shown in Fig. 1, the first jig receives the bellows portion 6 of the dust-proof boot in an extended state and fixes it in a state where the internal engaging ring 7 and the external engaging ring 8 project from the extreme end thereof.

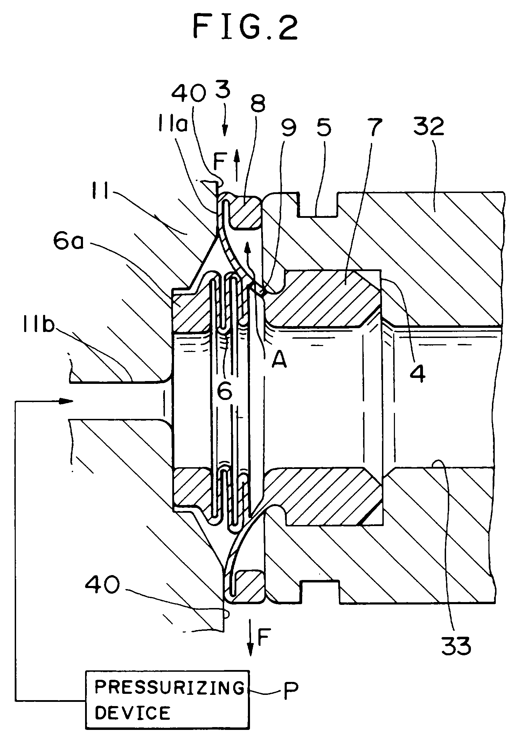

As shown in Fig. 2, the second jig 11 is formed with a communication hole 11b at a position coaxial with the center of the pin 2, and a pressurizing device P is connected to the communication hole 11b. Compressed air can be supplied into the guide hole 33 of the support 32 through the dust-proof boot 3. The second jig 11 has a pressing surface 40 substantially equal to an external diameter of the external engaging ring 8 in the spread state.

The process for mounting the dust-proof boot will be described hereinbelow.

The dust-proof boot 3 is moved toward the support 32 in the state where the bellows portion 6 is held within the tubular first jig 10 (Fig. 1).

The taper 7a of the internal engaging ring 7 is guided by the inner edge of the guide hole 33 of the support 32 and mounted in the internal groove 4 as the first jig moves close thereto (Fig. 2).

The jig is replaced by the second jig 11. and the external engaging ring 8 is lightly pressed and held between the support 32 and the pressing surface 40 of the second jig. Subsequently, compressed air A is supplied from the pressurizing device P into the dust-proof boot 3 through the communication hole 11b.

The compressed air A flows into a portion surrounded by the internal engaging ring 7, the external engaging ring 8 and the support 32 through the air flow port 9. The external engaging ring 8 held between the support 32 and the second jig 11 is spread by the pressure. When the second jig 11 is further moved forward toward the support 32 in the state where the external engaging ring 8 is fully spread, the external engaging ring 8 is pressed by the pressing surface 40 of the second jig 11 to climb over the support 32, and the ring 8 is fitted into the external groove 5.

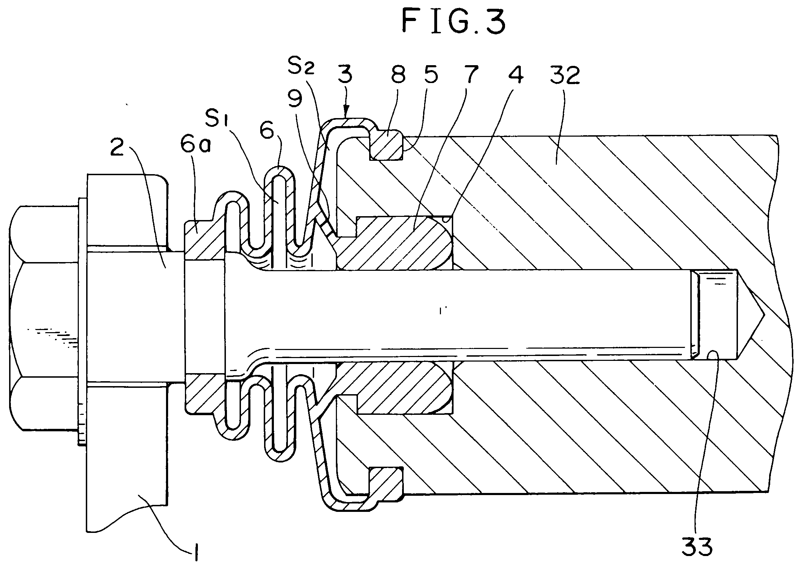

Fig. 3 shows the state where mounting of the dust-proof boot 3 is completed. In Fig. 3, the air flow port 9 merely extends through a space S1 between the outer peripheral surface of the pin 2 and the bellows portion 6 and a space S2 between the internal surface of the external engaging ring 8 and the end of the support 32, and the interior of the dust-proof boot 3 is isolated from the exterior. Because of this, entry of dust from the exterior is prevented.

## Claims

1. Dust-proof boot (3) for dust-proofing between a support (32) and a pin (2), inserted into a guide hole (33) of the support (32), of a disk brake, said boot (3) being made of resilient material and formed as a sleeve having an expansible bellows portion (6), a first end with an engaging ring (6a) for engagement with the pin (2), and a second end with an internal engaging ring (7) for internal engagement with the guide hole (33) as well as with an external engaging ring (8) for external engagement with the support (32),
**characterized in**
- that the boot (3) branches into an internal branch portion extending to the internal engaging ring (7) and an external branch portion extending to the external engaging ring (8);
- and that the internal branch portion comprises at least one air flow port (9) allowing the passage of compressed air (A) from the inside of the bellows portion (6) for spreading the external engaging ring (8) when, during the process of mounting the boot (3) to the support (32), a space (S2) is formed confined by the internal branch portion, the external branch portion and the part of the support (32) located between the internal engaging ring (7) and the external engaging ring (8).

2. Dust-proof boot (3) according to claim 1 wherein the internal engaging ring (7) is formed with a taper (7a) at the extreme end thereof to provide guiding of the internal engaging ring (7) during the mounting process.

3. A method for mounting the dust-proof boot (3) of claim 1 or 2 to the support (32), comprising:
- fitting the internal engaging ring (7) of the dust-proof boot (3) into an internal groove (4) of the guide hole (33) of the support (32), said support (32) being provided with the internal groove (4) and an external groove (5) in the inner periphery and outer periphery thereof, respectively in the vicinity of the extreme end of the guide hole (33);
- and thereafter supplying compressed air (A) from the interior of the bellows portion (6), said compressed air (A) flowing through the at least one air flow port (9) to spread the external engaging ring (8) so that the external engaging ring (8) is fitted into the external groove (5).

4. The method according to claim 3, comprising:
- moving a first jig (10) close to the support (32) to fit the internal engaging ring (7) into the internal groove (4) of the support (32), said first jig (10) receiving therein the dust-proof boot (3) in the state where the bellows portion (6) is expanded and having the internal engaging ring (7) and the external engaging ring (8) of the dust-proof boot (3) projected from the end thereof;
- and thereafter supplying compressed air (A) from the interior of the bellows portion (6), said compressed air (A) flowing into the air flow port (9) to spread the external engaging ring (8), and moving a second jig (11) having a diameter corresponding to the spread external engaging ring (8) close to the support (32), whereby the external engaging ring (8) is caused to climb over the end of the support (32) and fitted into the external groove (5).

5. The method of claim 4, comprising:
- moving the second jig (11) toward the support (32) for slightly pressing the external engaging ring (8) against the support (32);
- thereafter supplying compressed air (A);
- and finally moving the second jig (11) further forward, thereby pressing the fully spread external engaging ring (8) onto the support (32) and fitting it into the external groove (5).

## Patentansprüche

1. Staubdichte Manschette (3) zur Herstellung einer staubdichten Verbindung zwischen einer Halterung (32) und einem in eine Führungsöffnung (33) der Halterung (32) eingeführten Stift (2) einer Scheibenbremse, wobei die Manschette (3) aus elastischem Material hergestellt und als Hülse mit einem expandierbaren Balgbereich (6) ausgebildet ist, wobei ein erstes Ende mit einem Eingriffsring (6a) zum Eingriff mit dem Stift (2) und ein zweites Ende mit einem inneren Eingriffsring (7) für den Inneneingriff mit der Führungsöffnung (33) sowie mit einem äußeren Eingriffsring (8) für den Außeneingriff mit der Halterung (32) ausgebildet sind,
dadurch gekennzeichnet,
- daß die Manschette (3) in einen sich zu dem inneren Eingriffsring (7) erstreckenden inneren Zweigbereich und in einen sich zu dem äußeren Eingriffsring (8) erstreckenden äußeren Zweigbereich verzweigt ist;
- und daß der innere Zweigbereich wenigstens eine Luftdurchlaßöffnung (9) aufweist, die ein Durchströmen von Druckluft (A) von innerhalb des Balgbereichs (8) zum Auseinanderspreizen des äußeren Eingriffsrings (8) ermöglicht, wenn während des Anbringvorgangs der Manschette (3) an der Halterung (32) ein Raum (S2) gebildet wird, der durch den inneren Zweigbereich, den äußeren Zweigbereich und den sich zwischen dem inneren Eingriffsring (7) und dem äußeren Eingriffsring (8) befindlichen Teil der Halterung (32) begrenzt ist.

2. Staubdichte Manschette (3) nach Anspruch 1, wobei der innere Eingriffsring (7) an seinem äußersten Ende mit einer Abschrägung (7a) ausgebildet ist, um ein Führen des inneren Eingriffsrings (7) während des Anbringvorgangs zu schaffen.

3. Verfahren zum Anbringen der staubdichten Manschette (3) nach Anspruch 1 oder 2 an der Halterung (32), mit folgenden Schritten:
- Einpassen des inneren Eingriffsrings (7) der staubdichten Manschette (3) in eine innere Nut (4) der Führungsöffnung (33) der Halterung (32), wobei die Halterung (32) in der Nähe des äußersten Endes der Führungsöffnung (33) an ihrem Innenumfang und ihrem Außenumfang mit der inneren Nut (4) bzw. mit einer äußeren Nut (5) versehen ist;
- und anschließendes Zuführen von Druckluft (A) von innerhalb des Balgbereichs (6) her, wobei die Druckluft (A) durch die wenigstens eine Luftdurchlaßöffnung (9) hindurchströmt, um den äußeren Eingriffsring (8) auseinanderzuspreizen, so daß der äußere Eingriffsring (8) in die äußere Nut (5) eingepaßt wird.

4. Verfahren nach Anspruch 3, mit folgenden Schritten:
- Bewegen einer ersten Vorrichtung (10) nahe an die Halterung (32) heran zum Einpassen des inneren Eingriffsrings (7) in die innere Nut (4) der Halterung (32), wobei die erste Vorrichtung (10) die staubdichte Manschette (3) in einem Zustand aufnimmt, in dem der Balgbereich (6) auseinanderbewegt ist und der innere Eingriffsring (7) sowie der äußere Eingriffsring (8) der staubdichten Manschette (3) von dem Ende der Vorrichtung wegragen;
- und anschließend erfolgendes Zuführen von Druckluft (A) von innerhalb des Balgbereichs (6) , wobei die Druckluft (A) in die Luftdurchlaßöffnung (9) strömt, um den äußeren Eingriffsring (8) auseinanderzuspreizen, sowie Bewegen einer zweiten Vorrichtung (11) mit einem Durchmesser, der dem auseinandergespreizten äußeren Eingriffsring (8) entspricht, nahe an die Halterung (32) heran, wodurch der äußere Eingriffsring (8) dazu veranlaßt wird, sich über das Ende der Halterung (32) zu bewegen und in die äußere Nut (5) eingepaßt wird.

5. Verfahren nach Anspruch 4, mit folgenden Schritten:
- Bewegen der zweiten Vorrichtung (11) in Richtung auf die Halterung (32) zum geringfügigen Drücken des äußeren Eingriffsrings (8) gegen die Halterung (32);
- anschließend erfolgendes Zuführen von Druckluft (A);
- und schließlich erfolgendes weiteres Vorwärtsbewegen der zweiten Vorrichtung (11), um dadurch den voll auseinandergespreizten äußeren Eingriffsring (8) auf die Halterung (32) zu drücken und ihn in die äußere Nut (5) einzupassen.

## Revendications

1. Gaine de protection étanche à la poussière pour réaliser l'étanchéité à la poussière entre un support (32) et une broche (2), introduite dans un alésage de guidage (33) du support (32), d'un frein à disque, ladite gaine (3) étant faite en matériau élastique et ayant la forme d'un manchon ayant une partie extensible en accordéon (6), une première extrémité pourvue d'une bague de liaison (6a) pour la liaison avec la broche (2), et une seconde extrémité pourvue d'une bague de liaison interne (7) pour la liaison interne avec l'alésage de guidage (33) ainsi que d'une bague de liaison externe (8) pour la liaison externe avec le support (32),
caractérisé en ce que
- la gaine de protection (3) se ramifie en une partie de ramification interne s'étendant vers la bague de liaison interne (7) et une partie de ramification externe s'étendant vers la bague de liaison externe (8);
- et en ce que la partie de ramification interne comprend au moins une ouverture d'écoulement d'air (9) permettant le passage d'air comprimé (A) provenant de l'intérieur de la partie en accordéon (6) pour élargir la bague de liaison externe (8) lorsque, au cours du processus de montage de la gaine de protection (3) sur le support (32), un espace (S2) est formé enfermé entre la partie de ramification interne, la partie de ramification externe et la partie du support (32) située entre la bague de liaison interné (7) et la bague de liaison externe (8).

2. Gaine de protection étanche à la poussière (3) selon la revendication 1 dans laquelle la bague de liaison interne (7) présente un cône (7a) à son extrémité terminale pour assurer le guidage de la bague de liaison interne (7) au cours du processus de montage.

3. Procédé de montage de la gaine de protection étanche à la poussière (3) selon la revendication 1 ou 2 sur le support (32), consistant à :
- engager la bague de liaison interne (7) de la gaine de protection étanche à la poussière (3) dans une gorge interne (4) de l'alésage de guidage (33) du support (32), ledit support (32) étant pourvu de la gorge interne (4) et d'une gorge externe (5) dans sa périphérie interne et sa périphérie externe, respectivement, à proximité de l'extrémité terminale de l'alésage de guidage (33);
- et délivrer ensuite de l'air comprimé (A) provenant de l'intérieur de la partie en accordéon (6), ledit air comprimé (A) s'écoulant par au moins une ouverture d'écoulement d'air (9) pour élargir la bague de liaison externe (8) de façon que la bague de liaison externe (8) s'engage dans la gorge externe (5).

4. Procédé selon la revendication 3, consistant à :
- amener un premier guide (10) près du support (32) pour engager la bague de liaison interne (7) dans la gorge interne (4) du support (32), ledit premier guide (10) contenant la gaine de protection étanche à la poussière (3) dans l'état où la partie en accordéon (6) est allongée et la bague de liaison externe (8) de la gaine de protection étanche à la poussière (3) dépassant de son extrémité;
- et délivrer ensuite de l'air comprimé (A) provenant de l'intérieur de la partie en accordéon (6), ledit air comprimé (A) s'écoulant dans l'ouverture d'écoulement d'air (9) pour élargir la bague de liaison externe (8), et amener un second guide (11) ayant un diamètre correspondant à la bague de liaison externe élargie (8) près du support (32), ce qui provoque la montée de la bague de liaison externe (8) sur l'extrémité du support (32) et son engagement dans la gorge externe (5).

5. Procédé selon la revendication 4, consistant à :
- avancer le second guide (11) vers le support (32) pour presser légèrement la bague de liaison externe (8) contre le support (32);
- délivrer ensuite l'air comprimé (A);
- et enfin avancer davantage le second guide (11), la bague de liaison externe (8) complètement élargie étant ainsi poussée sur le support (32).
